# EUROPEAN PATENT APPLICATION

(11) **EP 1 839 483 A1**
(43) Date of publication of application: **03.10.2007**
(21) Application number: 07004308.8
(22) Date of filing: 02.03.2007
(51) Int. Cl.: A01J 5/007, A01J 5/017

(54) **Adaptive milking system**

(30) Priority: 31.03.2006 US 395933
(71) Applicant: Bou-Matic Technologies Corporation, Madison, WI 53716 (US)
(72) Inventor: Tucker, George H., Janesville WI 53545 (US); Erdman, Roger K., Janesville WI 53545 (US)
(74) Representative: Gesthuysen, von Rohr & Eggert

(57) **Abstract**

A method for milking a mammal is provided by interactively and variably responding to sensed and monitored milk flow and adaptively varying one or more given milking parameters in response thereto for the individual mammal.

## Description

The invention relates to systems for milking mammals, including cows. In particular the invention relates to a method for milking a mammal with the features of the introductory part of claim 1.

Known methods for milking mammals include attaching teatcups to the teats of the mammal for milk flow to a claw and collection container, sensing of the milk flow, comparing the sensed milk flow to a given threshold, and detaching the teatcups from the teats upon reaching such given threshold, e.g. after a given delay enabling full milk flow to be established, the teatcups are detached when the milk flow drops below a given threshold (US-A-5,218,924 = EP-B-0 631 468).

The present invention arose during continuing development efforts directed toward improving operation of the noted systems.

So the object of the invention is to improve operation of a method for milking a mammal.

The above object is met with a method for milking a mammal with the features of the introductory part of claim 1 additionally comprising the features of the characterizing part of claim 1. According to the invention the milk flow for an individual mammal is sensed and monitored. Following said sensed and monitored milk flow of the individual mammal an interactive and variable response is initiated. This leads to the result that at least one given parameter is adaptively varied in response to the sensed and monitored milk flow for the individual mammal.

Preferred embodiments of the invention are the subject matter of the dependent claims 2 to 25.

In particular detachment of the teatcups from the teats (claim 2), a detach threshold for the milk flow (claim 3), a letdown delay for the teatcups (claim 5, 6), a manual attachment retention mode (claim 8), and a teat preparation analysis (claim 9) are possibly selectable parameters.

Dependent claims 9 to 12 refer to special features of the milk flow pattern indicative of teat preparation.

Dependent claims 14 to 25 each combine different parameters from two different parameters up to altogether four different parameters simultaneously varied in response to the sensed and monitored milk flow of the individual mammal.

Further details and preferred embodiments are explained hereafter along with an explanation of the drawing. In the drawings:
- Fig. 1: schematically illustrates a milking system known in the prior art.
- Fig. 2: shows a teatcup and liner during the on portion of a pulsation milking cycle as known in the prior art.
- Fig. 3: is like Fig. 2 and illustrates the off portion of the pulsation milking cycle.
- Fig. 4: is a flow chart illustrating operation of the system of Fig. 1 and a method for milking a mammal known in the prior art.
- Fig. 5: is like Fig. 4 and illustrates the present invention.
- Fig. 6: is like Fig. 4 and illustrates a further embodiment of the present invention.
- Fig. 7: is like Fig. 4 and illustrates a further embodiment of the present invention.
- Fig. 8: is like Fig. 4 and illustrates a further embodiment of the present invention.

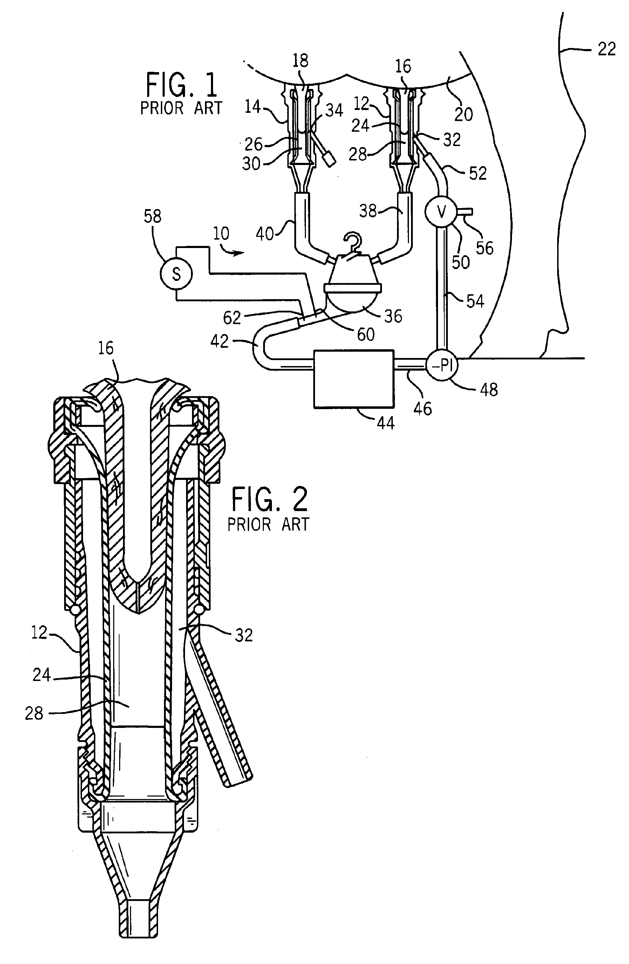

Figs. 1 to 3 are taken from US-A-5,218,924 (equivalent to EP-B-0 631 468), the content of which is incorporated herein by reference.

Fig. 1 shows a milking system 10 having a plurality of teatcups such as 12, 14 connected to respective teats such as 16, 18 depending from the udder 20 of a mammal 22 such as a cow. Each teatcup has a liner or inflation such as 24, 26 around a respective teat, and defining a milk flow passage such as 28, 30 within the liner below the teat, and a pulsation chamber such as 32, 34 outside the liner between the liner and the teatcup shell. The teatcup and liner are shown and described in U.S. Patent No. 4,530,307, incorporated herein by reference. A milking claw 36, for example as shown in U.S. Patent No. 4,537,152, incorporated herein by reference, has a plurality of inlets receiving milk through tubes such as 38, 40 connected to respective teatcups to receive milk from respective milk flow passages such as 28, 30. The claw has a discharge tube 42 connected to milk collection container 44 having a vacuum connection tube 46 connected to a source of negative pressure 48. There are a multitude of arrangements of this negative pressure source, as well known in the art. Negative pressure source 48 applies substantially constant negative pressure (vacuum), relative to atmospheric pressure, through claw 36 to milk flow passages 28, 30.

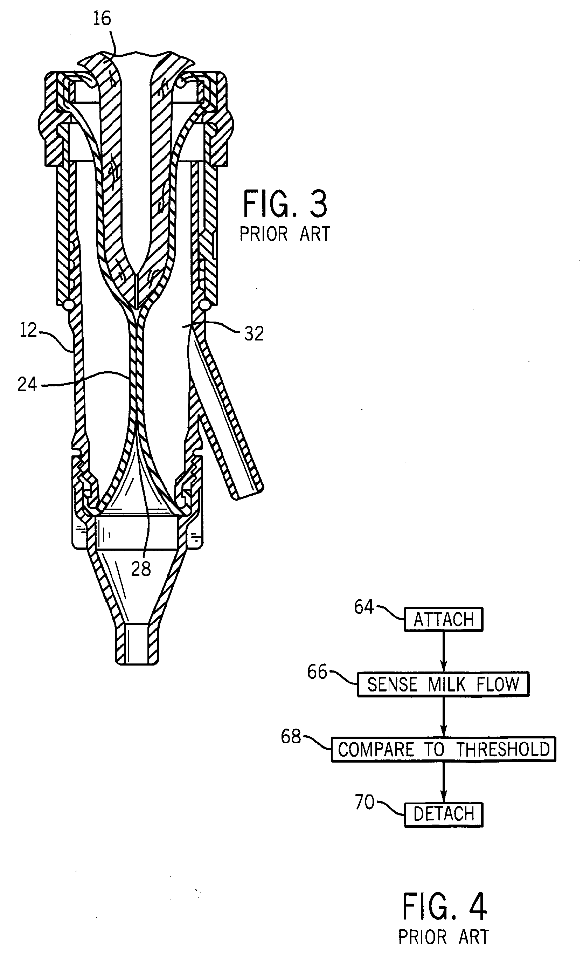

The system has a pulsation milking cycle with an on portion and an off portion. Milk flows from the teat towards claw 36 during the on portion. A valve or pulsator 50 is connected to each of the teatcups at a connection tube such as 52 and has first and second conditions alternately and cyclically connecting the teatcup to the negative pressure source 48 through connection tube 54 during the on portion of the pulsation milking cycle, and connecting the teatcup to atmosphere through connection tube 56 during the off portion of the pulsation milking cycle. There are a multitude of arrangements for making the connections to the pulsator, as well known in the art. It is also known in the prior art to connect the teatcup to a source of positive pressure, relative to atmospheric pressure, during the off portion of the pulsation milking cycle, e.g. by supplying connection tube 56 with a source of positive pressure. During the off portion of the pulsation milking cycle, the positive pressure or atmospheric pressure applied through connection tube 56, valve 50, and connection tube 52 to pulsation chamber 32 of teatcup 12 collapses and closes liner 24 below teat 16, Fig. 3, to block milk flow, and to relieve the teat from the negative pressure applied from source 48 through connection tube 46, container 44, connection tube 42, claw 36, and connection tube 38 to milk flow passage 28 at the lower end of liner 24. During the on portion of the pulsation milking cycle, negative pressure from source 48 is applied through connection tube 54, valve 50, and connection tube 52 to pulsation chamber 32 of teatcup 12, such that liner 24 opens to its normally open position, FIG. 2, and milk is withdrawn from teat 16.

Further as known in the prior art, a sensor such as 58, Fig. 1, is provided for sensing milk flow from the teats to the claw and collection container. In one known embodiment, a pair of electrodes such as 60, 62 are provided in the claw outlet for sensing electrical resistance therebetween, the lower the resistance the greater amount of milk. After the teatcups are attached to the teats as shown at step 64 in Fig 4, sensor 58 senses milk flow by sensing resistance across electrodes 60 and 62, as shown at step 66. After a given delay to allow steady milk flow to be established, typically called letdown delay, the sensed milk flow is compared to a threshold, as shown at step 68, and when the milk flow ceases or drops below such threshold, the teatcups are automatically detached from the teats, e.g. by removing vacuum from the teatcups, all as is known for automatic systems.

Automatic milk systems use a sensor such as 58 to detect the presence or absence of milk. If milk is present, the teatcups stay attached. If there is no milk for a long enough time, the teatcups detach. Many detachers use some variant of an electrical resistance measurement and a comparator to determine the presence of milk. If the electrical resistance is below a predefined threshold, the unit assumes that milk is present. If the electrical resistance is above the threshold, then the unit assumes no milk is present. Most automatic milk systems will not automatically detach the teatcups after the initial attach for a fixed time interval (letdown delay) to allow the milk flow to be established. Letdown delay must be long enough to allow most, if not all, cows to establish steady flow, but not so long that the faster milking cows are overmilked. Automatic milk systems further include a bypass or manual mode that allows the dairyman to force the milking unit to stay attached to the cow even though low milk flow would normally cause detachment. This manual mode keeps the unit attached until the dairyman either deactivates the manual mode or manually detaches the unit.

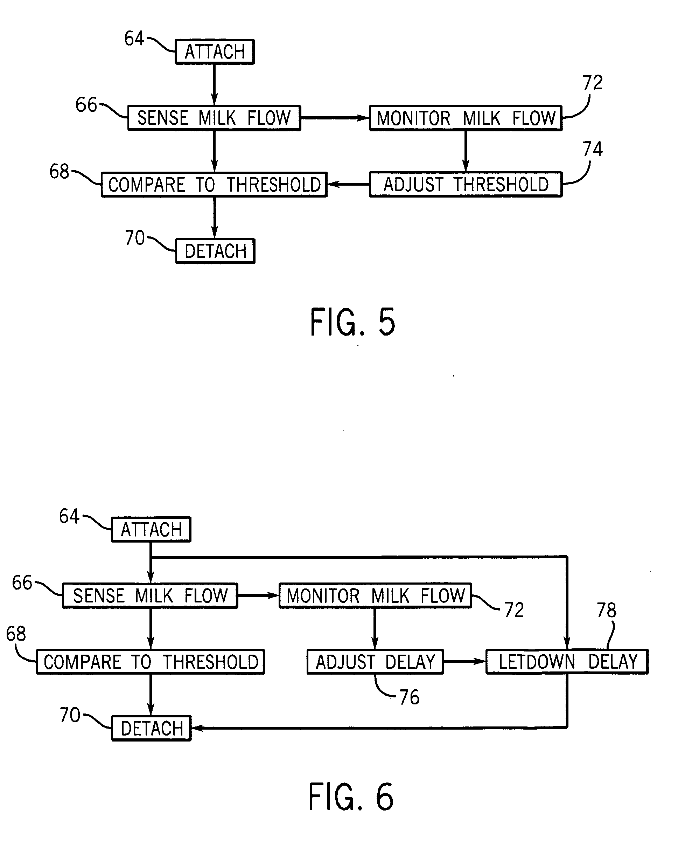

Figs. 5-8 illustrate the present invention and use like reference numerals from above where appropriate to facilitate understanding. The present invention provides a method for milking a mammal, including attaching the teatcups to the teats of the mammal for milk flow to a claw and collection container as above, sensing and monitoring the milk flow for the individual mammal, interactively and variably responding to the sensed and monitored milk flow, and adaptively varying a given parameter in response thereto for the individual mammal.

In Fig. 5, the noted adaptively varied parameter is detachment of the teatcups from the teats. The sensed milk flow is monitored at 72, and the detach threshold is adjusted in response thereto at 74, for example so that the teatcups can stay attached longer to fully milk out slower milking cows, without overmilking the fast milking cows. The teatcups detach from the teats in response to the detach decision at the detach threshold at 68, namely when the milk flow falls below the detach threshold. Such detach threshold milking parameter is adaptively varied according to the individual mammal. The sensed milk flow is monitored at 72 to respond to a milk flow pattern for the individual mammal, and the detach threshold is varied at 74 in response thereto, to adapt the detach decision and threshold at 68 according to the milk flow pattern for the individual mammal.

Fig. 6 illustrates adaptive letdown delay in accordance with the present system. The noted adaptively varied parameter is duration of the minimum time of attachment of the teatcups to the teats. After attachment of the teatcups to the teats, the teatcups remain attached to the teats for a minimum duration, namely letdown delay. This letdown delay is adaptively varied according to the individual mammal, rather than providing a universal, one-size-fits-all, minimum duration delay before detachment of the teatcups from the teats. The sensed milk flow is monitored at 72 to respond to a milk flow pattern for the individual mammal, and the letdown delay is varied at 76 in response thereto, to adapt the minimum duration letdown delay at 78 according to the milk flow pattern for the individual mammal. Letdown delay 78 of Fig. 6 is known in the prior art and typically has been in the range of about 3 to 4 minutes. This was long enough to let most cows get a good start, but less than the normal 5 to 8 minutes milking time. Recently, however, it has become common practice to milk high producing cows twice in a single milking, to increase overall milk production. At the same time, dairies have increased vacuum levels and settings to speed up the milking process. As a result, some cows are now being milked out in shorter times, often in the 2 to 4 minute range. Because of this, it is no longer possible to have a single letdown delay 78 that is appropriate for all of the cows in a herd. The system of Fig. 6 uses adaptive control logic to improve this process. When the teatcups are attached, letdown delay 78 begins as usual. If steady milk flow does not start by the end of the normal letdown delay interval 78, the teatcups will detach normally. If the detacher senses and monitors milk flow at 66 and 72 for a predetermined time, e.g. for one minute, during the letdown interval, the detacher assumes that the cow has achieved letdown and changes to normal mode, i.e. adjust the letdown delay at 76 to zero, or eliminates any remaining letdown delay interval. Accordingly, at any time after such adjustment, if the milk flow drops below the detach threshold at 68 (which may or may not be adaptively varied by adjustment 74, Fig. 5), the unit will detach. Problem cows and fast milking cows are both accommodated by such system. The dairyman can set the letdown delay for the worst problem cows, i.e. the slowest milking cows, and not worry about overmilking the fast milking cows.

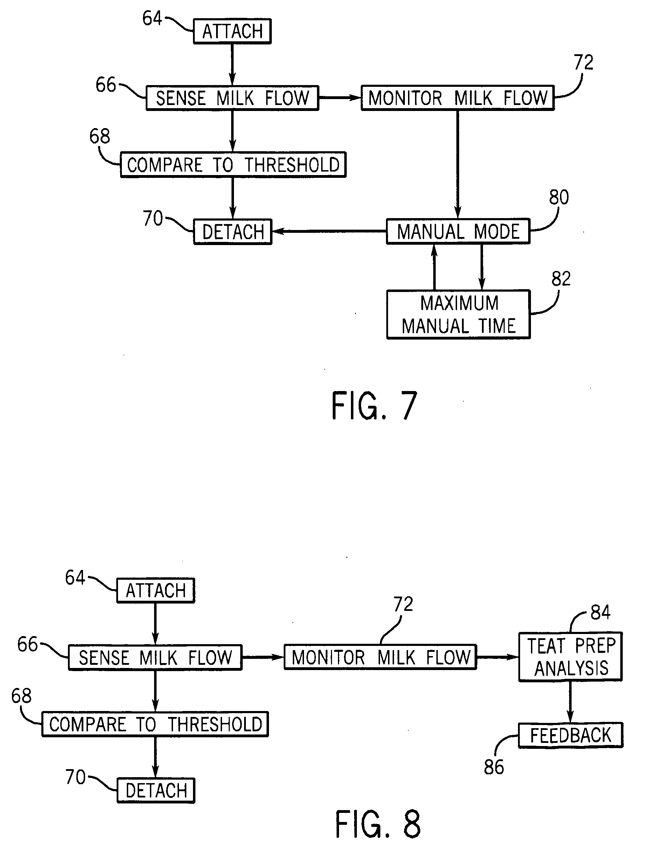

Fig. 7 illustrates an adaptive manual mode, including a maximum manual time. As noted above, prior milking systems have a manual attachment retention mode 80 maintaining attachment of the teatcups to the teats even if milk flow ceases or drops below the detach threshold at 68, which manual override or bypass mode prevents detachment at 70. In the system of Fig. 7, the noted adaptively varied parameter is the manual attachment retention mode which is adaptively varied in response to the monitoring of milk flow at 72. The manual attachment retention mode 80 is adaptively deactivated in response to milk flow as sensed and monitored at 66 and 72 such that the teatcups detach from the teats in response to the detach threshold at 68, namely when the milk flow falls below such detach threshold ( whether or not such detach threshold 68 is adaptively varied at 74, Fig. 5). Further in Fig. 7, the manual attachment retention mode 80 is provided with a maximum manual time limit at 82. The manual attachment retention mode 80 is deactivated responsive to the maximum manual time limit 82 regardless of milk flow and regardless of the noted adaptive deactivation of manual attachment retention mode 80. Unfortunately, dairyman milkers often get distracted after they have started the manual mode, and the milking unit teatcups stay attached long after the cow stops giving milk. This overmilking can cause damage to the teat ends of the cows. If the system determines that the unit is in the manual mode longer than a user settable limit at 82, the override provided by maximum manual time limit 82 changes the manual mode 80 to automatic detach mode, regardless of the milk flow. Thus, when the sensed milk flow at 66 is below the detach threshold at 68, the unit detaches at 70. This limits the total amount of time that a cow can be in manual mode, and also prevents a milking unit from being left on a cow that is not producing milk.

Fig. 8 illustrates an adaptive teat preparation analysis and feedback method. Proper preparation of the teat is a significant factor in getting fast, full milkout of cows without overmilking that can damage the teat ends. When a cow is properly prepped, milk flow will start soon after attach, and rapidly increase to full, steady flow. A poorly prepped cow may exhibit several problem symptoms, including: slower than normal flow start; flow start, then stop, then re-start; and intermittent flow, namely flow start and stop several times during the first two minutes of teatcup attachment. Milk flow is monitored at 72, and a milk flow pattern indicative of teat preparation for the individual mammal is analyzed at 84, and a feedback indication thereof is provided at 86, e.g. a signal notifying the dairyman milkers in the parlor by flashing an indicator light on the individual stall, which quick feedback will help the dairymen milkers to improve their prep methods. The teat prep analysis at 84 can also send a message or feedback signal at 86 to a central data collection system, so that reports can be generated on milker performance. The selected milk flow pattern, for example one or more of the above noted patterns, indicates less than desired teat preparation, which is indicated in the noted feedback indication. In one embodiment, the milk flow pattern is sensed by counting the total time of milk flow absence during a given interval following teatcup attachment, and when such total time exceeds a given value, feedback indication is activated at 86, indicating a less than desired teat preparation. Such given interval begins after a first time increment following teatcup attachment, and ends after a second time increment following the teatcup attachment. Preferably, the first time increment is at least 10 seconds, and in one embodiment about 15 seconds, and the second time increment is preferably greater than 45 seconds, and in one embodiment at least 75 seconds. The noted given parameter is the noted feedback indication, and such feedback indication is adaptively varied in response to the monitored milk flow pattern for the individual mammal, including indication of less than desirable teat preparation.

## Claims

1. A method for milking a mammal comprising attaching teatcups to the teats of a mammal for milk flow to a claw and collection container,
characterizes by the following method steps:
a) sensing and monitoring the milk flow for said individual mammal,
b) interactively and variably responding to said sensed and monitored milk flow of said individual mammal and adaptively varying at least one given parameter in response thereto for said individual mammal.

2. The method according to claim 1, **characterized in that**
said given parameter or one of said given parameters is detachment of said teatcups from said teats.

3. The method according to claim 1 or 2 comprising
detaching said teatcups from said teats when said milk flow falls below a detach threshold being said given parameter or one of said given parameters, and adaptively varying said detach threshold according to said individual mammal.

4. The method according to claim 3 comprising
responding to a milk flow pattern for the individual said mammal and varying said detach threshold in response thereto, to adapt said detach decision according to said milk flow pattern for said individual mammal.

5. The method according to any one of the preceding claims, **characterized in that** said given parameter or one of said given parameters is duration of attachment of said teatcups to said teats.

6. The method according to any one of the preceding claims, **characterized in that** after said attachment of said teatcups to said teats said teatcups remain attached to said teats for a minimum duration, namely a letdown delay, being said given parameter or one of said given parameters, and said letdown delay is adaptively varied according to said individual mammal.

7. The method according to claim 6 **characterized in that**
said teatcups remain attached to said teats for a minimum duration to provide a letdown delay before detachment of said teatcups from said teats,
the method further comprises responding to a milk flow pattern for the individual said mammal and varying said letdown delay in response thereto, to adapt said minimum duration of attachment according to said milk flow pattern for said individual mammal.

8. The method according to any one of the preceding claims, **characterized in that**
said method has a manual attachment retention mode maintaining attachment of said teatcups to said teats even if said milk flow ceases, wherein said given parameter or one of said given parameters is said manual attachment retention mode,
wherein, preferably, the method further comprises adaptively deactivating said manual attachment retention mode in response to said milk flow such that said teatcups detach from said teats in response to a detach threshold, namely when said milk flow falls below said detach threshold,
wherein, further preferably, the method further comprises providing said manual attachment retention mode with a maximum manual time limit, and deactivating said manual attachment retention mode responsive to said maximum manual time limit regardless of said milk flow and regardless of said adaptive deactivation of said manual attachment retention mode.

9. The method according to any one of the preceding claims, **characterized in that** monitoring a milk flow pattern indicative of teat preparation for said individual mammal is done and a feedback indication thereof is provided.

10. The method according to claim 9, **characterized in that**
said milk flow pattern is selected from the group consisting of at least one of:
a) slower than normal flow rate;
b) flow start, then stop, then re-start; and
c) intermittent flow, namely flow start and stop several times during the first two minutes of teatcup attachment; and said selected milk flow pattern indicates less than desired teat preparation, which is indicated by said feedback indication.

11. The method according to claim 10, **characterized in that**
monitoring said milk flow pattern is done by counting the total time of milk flow absence during a given interval following teatcup attachment, and when said total time exceeds a given value, indicating with said feedback indication a less than desired teat preparation,
wherein, preferably, said given interval begins after a first time increment following said teatcup attachment, and ends after a second increment following said teatcup attachment,
wherein, further preferably, said first time increment is at least 10 seconds, and said second time increment is greater than 45 seconds.

12. The method according to any one of the claims 9 to 11, **characterized in that**
said given parameter or one of said given parameters is said feedback indication, and the method further comprises adaptively varying said feedback indication in response to said monitored milk flow pattern for said individual mammal, including indication of less than desirable teat preparation.

13. The method according to any one of the preceding claims, **characterized in that**
said given parameter is or said given parameters are selected from the group consisting of detach threshold, letdown delay, manual attachment retention mode, and teat preparation analysis.

14. The method according to any one of the claims 1 to 13, the method further comprising
detaching said teatcups from said teats in response to a detach threshold, namely when said milk flow falls below said detach threshold, and wherein said given parameter is said detach threshold, and comprising adaptively varying said detach threshold according to said individual mammal, and also adaptively varying a second given parameter in response to said sensed and monitored milk flow for said individual mammal, wherein after said attachment of said teatcups to said teats said teatcups remain attached to said teats for a minimum duration, namely letdown delay, and wherein said second given parameter is said letdown delay, and comprising adaptively varying said letdown delay according to said individual mammal.

15. The method according to any one of the claims 1 to 13, the method further comprising
detaching said teatcups from said teats in response to a detach decision when milk flow drops below a detach threshold, and comprising responding to a milk flow pattern for said individual mammal and varying said detach threshold in response thereto, to adapt said detach decision according to said milk flow pattern for the individual said mammal, and comprising also adaptively varying a second given parameter in response to said sensed and monitored milk flow for said individual mammal, wherein said teatcups remain attached to said teats for a minimum duration to provide a letdown delay before detachment of said teatcups from said teats, and comprising responding to a milk flow pattern for said individual mammal and varying said letdown delay in response thereto, to adapt said minimum duration of attachment according to said milk flow pattern for said individual mammal.

16. The method according to any one of the claims 1 to 13, the method further comprising
detaching said teatcups from said teats in response to a detach threshold, namely when said milk flow falls below said detach threshold, and wherein said given parameter is said detach threshold, and comprising adaptively varying said detach threshold according to said individual mammal, and comprising also adaptively varying a second given parameter in response to said sensed and monitored milk flow for said individual mammal, wherein said method has a manual attachment retention mode maintaining attachment of said teatcups to said teats even if said milk flow ceases, and wherein said second given parameter is said manual attachment retention mode, and comprising adaptively deactivating said manual attachment retention mode in response to said milk flow such that said teatcups detach from said teats in response to said detach threshold, namely when said milk flow falls below said detach threshold.

17. The method according to any one of the claims 1 to 13, the method further comprising
detaching said teatcups from said teats in response to a detach threshold, namely when said milk flow falls below said detach threshold, and wherein said given parameter is said detach threshold, and comprising adaptively varying said detach threshold according to said individual mammal, and comprising also adaptively varying a second given parameter in response to said sensed and monitored milk flow for said individual mammal, comprising monitoring a milk flow pattern indicative of teat preparation for said individual mammal and providing a feedback indication thereof, wherein said second given parameter is said feedback indication, and comprising adaptively varying said feedback indication in response to said monitored milk flow pattern for the individual said mammal, including indication of less than desirable teat preparation.

18. The method according to any one of the claims 1 to 13, **characterized in that** after said attachment of said teatcups to said teats, said teatcups remain attached to said teats for a minimum duration, namely letdown delay, and wherein said given parameter is said letdown delay, and comprising adaptively varying said letdown delay according to said individual mammal, and comprising also adaptively varying a second given parameter in response to said sensed and monitored milk flow for said individual mammal, wherein said method has a manual attachment retention mode maintaining attachment of said teatcups to said teats even if said milk flow ceases, and wherein said second given parameter is said manual attachment retention mode, and comprising adaptively deactivating said manual attachment retention mode in response to said milk flow such that said teatcups detach from said teats in response to a detach threshold, namely when said milk flow falls below said detach threshold.

19. The method according to any one of the claims 1 to 13, **characterized in that**
after said attachment of said teatcups to said teats, said teatcups remain attached to said teats for a minimum duration, namely letdown delay, and wherein said given parameter is said letdown delay, and comprising adaptively varying said letdown delay according to said individual mammal, and comprising also adaptively varying a second given parameter in response to said sensed and monitored milk flow for said individual mammal, and comprising monitoring a milk flow pattern indicative of teat preparation for the individual said mammal and providing a feedback indication thereof, wherein said second given parameter is said feedback indication, and comprising adaptively varying said feedback indication in response to said monitored milk flow pattern for said individual mammal, including indication of less than desirable teat preparation.

20. The method according to any one of the claims 1 to 13, **characterized in that**
said method has a manual attachment retention mode maintaining attachment of said teatcups to said teats even if said milk flow ceases, and wherein said given parameter is said manual attachment retention mode, comprising adaptively deactivating said manual attachment retention mode in response to said milk flow such that said teatcups detach from said teats in response to a detach threshold, namely when said milk flow falls below said detach threshold, and comprising also adaptively varying a second given parameter in response to said sensed and monitored milk flow for said individual mammal, and comprising monitoring a milk flow pattern indicative of teat preparation for said individual mammal and providing a feedback indication thereof, wherein said second given parameter is said feedback indication, and comprising adaptively varying said feedback indication in response to said monitored milk flow pattern for said individual mammal, including indication of less than desirable teat preparation.

21. The method according to any one of the claims 1 to 13, the method further comprising
detaching said teatcups from said teats in response to a detach threshold, namely when said milk flow falls below said detach threshold, and wherein said given parameter is said detach threshold, and comprising adaptively varying said detach threshold according to said individual mammal, and comprising also adaptively varying a second given parameter in response to said sensed and monitored milk flow for said individual mammal, wherein after said attachment of said teatcups to said teats, said teatcups remain attached to said teats for a minimum duration, namely letdown delay, and wherein said second given parameter is said letdown delay, and comprising adaptively varying said letdown delay according to said individual mammal, and comprising also adaptively varying a third given parameter in response to sensed and monitored milk flow for said individual mammal, wherein said method has a manual attachment retention mode maintaining attachment of said teatcups to said teats even if said milk flow ceases, and wherein said third given parameter is said manual attachment retention mode, and comprising adaptively deactivating said manual attachment retention mode in response to said milk flow such that said teatcups detach from said teats in response to said detach threshold, namely when said milk flow falls below said detach threshold.

22. The method according to any one of the claims 1 to 13, **characterized in that**
after said attachment of said teatcups to said teats, said teatcups remain attached to said teats for a minimum duration, namely letdown delay, and wherein said given parameter is said letdown delay, and comprising adaptively varying said letdown delay according to said individual mammal, and comprising also adaptively varying a second given parameter in response to said sensed and monitored milk flow for said individual mammal, wherein said method has a manual attachment retention mode maintaining attachment of said teatcups to said teats even if said milk flow ceases, and wherein said second given parameter is said manual attachment retention mode, and comprising adaptively deactivating said manual attachment retention mode in response to said milk flow such that said teatcups detach from said teats in response to a detach threshold, namely when said milk flow falls below said detach threshold, and comprising also adaptively varying a third given parameter in response to said sensed and monitored milk flow for said individual mammal, and comprising monitoring a milk flow pattern indicative of teat preparation for said individual mammal and providing a feedback indication thereof, wherein said third given parameter is said feedback indication, and comprising adaptively varying said feedback indication in response to said monitored milk flow pattern for said individual mammal, including indication of less than desirable teat preparation.

23. The method according to any one of the claims 1 to 13, **characterized in that**
said method has a manual attachment retention mode maintaining attachment of said teatcups to said teats even if said milk flow ceases, and wherein said given parameter is said manual attachment retention mode, and comprising adaptively deactivating said manual attachment retention mode in response to said milk flow such that said teatcups detach from said teats in response to a detach threshold, namely when said milk flow falls below said detach threshold, and comprising also adaptively varying a second given parameter in response to said sensed and monitored milk flow for said individual mammal, and comprising monitoring a milk flow pattern indicative of teat preparation for said individual mammal and providing a feedback indication thereof, wherein said second given parameter is said feedback indication, and comprising adaptively varying said feedback indication in response to said monitored milk flow pattern for said individual mammal, including indication of less than desirable teat preparation, and comprising also adaptively varying a third given parameter in response to said sensed and monitored milk flow for said individual mammal, and comprising detaching said teatcups from said teats in response to said detach threshold, namely when said milk flow falls below said detach threshold, and wherein said milking parameter is said detach threshold, and comprising adaptively varying said detach threshold according to the individual mammal.

24. The method according to any one of the claims 1 to 13, the method further comprising
monitoring a milk flow pattern indicative of teat preparation for said individual mammal and providing a feedback indication thereof, wherein said given parameter is said feedback indication, and comprising adaptively varying said feedback indication in response to said monitored milk flow pattern for said individual mammal, including indication of less than desirable teat preparation, and comprising also adaptively varying a second given parameter in response to said sensed and monitored milk flow for said individual mammal, and comprising detaching said teatcups from said teats in response to a detach threshold, namely when said milk flow falls below said detach threshold, and wherein said second given parameter is said detach threshold, and comprising adaptively varying said detach threshold according to said individual mammal, and comprising also adaptively varying a third given parameter in response to said sensed and monitored milk flow for said individual mammal, wherein after said attachment of said teatcups to said teats, said teatcups remain attached to said teats for a minimum duration, namely letdown delay, and wherein said third given parameter is said letdown delay, and comprising adaptively varying said letdown delay according to the individual mammal.

25. The method according to any one of the claims 1 to 13, the method further comprising
detaching said teatcups from said teats in response to a detach threshold, namely when said milk flow falls below said detach threshold, and wherein said given parameter is said detach threshold, and comprising adaptively varying said detach threshold according to said individual mammal, and comprising also adaptively varying a second given parameter in response to said sensed and monitored milk flow for said individual mammal, wherein after said attachment of said teatcups to said teats, said teatcups remain attached to said teats for a minimum duration, namely letdown delay, and wherein said second given parameter is said letdown delay, and comprising adaptively varying said letdown delay according to said individual mammal, and comprising also adaptively varying a third given parameter in response to said sensed and monitored milk flow for the individual mammal, wherein said method has a manual attachment retention mode maintaining attachment of said teatcups to said teats even if said milk flow ceases, and wherein said third given parameter is said manual attachment retention mode, and comprising adaptively deactivating said manual attachment retention mode in response to said milk flow such that said teatcups detach from said teats in response to said detach threshold, namely when said milk flow falls below said detach threshold, and comprising also adaptively varying a fourth given parameter in response to said sensed and monitored milk flow for said individual mammal, and comprising monitoring a milk flow pattern indicative of teat preparation for the individual mammal and providing a feedback indication thereof, wherein said fourth given parameter is said feedback indication, and comprising adaptively varying said feedback indication in response to said monitored milk flow pattern for said individual mammal, including indication of less than desirable teat preparation.
